# EUROPEAN PATENT SPECIFICATION

(11) **EP 0 505 897 B1**
(45) Date of publication and mention of the grant of the patent: **12.02.1997**
(21) Application number: 92104611.6
(22) Date of filing: 17.03.1992
(51) Int. Cl.: C08G 63/185

(54) **Polyesters showing a high crystallization rate and process for their preparation**
Polyester mit hoher Kristallisationsgeschwindigkeit und Verfahren zu ihrer Herstellung
Polyesters ayant une vitesse de cristallisation élevée et procédé pour leur préparation

(30) Priority: 18.03.1991 IT MI910713
(43) Date of publication of application: 30.09.1992
(73) Proprietor: ENICHEM S.p.A., I-20124 Milano (IT)
(72) Inventor: Po', Ricardo, Dr., I-28100 Novara (IT); Occhiello, Ernesto, Dr., I-28100 Novara (IT); Garbassi, Fabio, Dr., I-28100 Novara (IT); Pelosini, Luigi, I-28010 Fontaneto d'Agogna (NO) (IT)
(74) Representative: Weinhold, Peter, Dr.

(56) References cited:
- PATENT ABSTRACTS OF JAPAN, vol. 5, no. 180 (C-79)[852], 19 November 1981
- MAKROMOLECULAR CHEMISTRY, vol. 186, no. 8, August 1985; pages 1575-1591; A.Y. BILIBIN et al.: "Thermotropic polyesters, 2. Synthesis of regular polyesters from aromatic dicarboxylic acids and phenols or aliphatic diols, and study of their mesomorphic properties"
- MOLECULAR CRYST. LIQ. CRYST., vol. 193, November/December 1990; pages 199-204; E. HEMPEL et al.: "From conventional to liquid crystalline polyesters"

## Description

The present invention relates to a process for preparing polyesters showing a high crystallization rate.

It is well-known that polyester resins, such as polyethylene terephthalate (PET), have advantageous physical and chemical characteristics which make them particularly suitable for the manufacture of fibres, films, cable holders, moulded articles, etc.

It is also known that their crystallization behaviour influences many of the above applications and presents obvious disadvantages. It is sufficent to remember, for example, that when PET is injected, long moulding cycles are required due to the slow crystallization thereof.

Numerous methods have been proposed for increasing the crystallization rate of polyester resins. One of these, described in EP-A-258,636 and in US-A-4,486,561, comprises the use of the salts of weak acids, such as carboxylic acids, or the salts of phenols as additives. This kind of modification is usually defined as chemical nucleation and its mechanism is described in an article by J.P. Mercier in "Polymer Engineering and Science", Vol. 30, 1990, pages 270-278.

Another method proposed in the literature for improving the crystallization kinetics of polyester resins is the mixing thereof with other polymers, for example HDPE (EP-A-104131), polyamides (EP-A-303234), polyesteramides (EP-A-143953) or liquid crystalline polyesters (JP-A-89/170646). Another method comprises the mixing thereof with organic compounds such as phthalimides (US-A-4,639,480), acetals, amides, nitriles, sulphones and sulphoxides (DE-A-35 32 033).

All these methods, however, require the mixing with additives which means that the polymer resulting from the synthesis has to undergo a thermal cycle, with the associated degradation problems.

This problem is particularly evident in the chemical nucleation of polyethylene terephthalate with the salts of weak acids and phenols which cause a considerable degradation of the PET. In this case it is necessary to use reactive compounds towards the terminal groups, such as epoxy resins, to limit the reduction of the molecular weight of the polymer.

It has now been found that the drawbacks of the known methods relating to the crystallization kinetics of polyester resins can be overcome by using small molar quantitites of a specific reagent in the polymerization mixture which causes the polymer to crystallize very rapidly (intrinsic crystallization) even in the absence of specific additives.

Accordingly, the present invention provides a process for preparing polyesters showing a high crystallization rate, comprising the reaction of at least one C₂-C₄ alkylene glycol with a mixture composed of (a) at least one of terephthalic acid and/or derivatives thereof and (b) 0.1 to 1.5 mole-%, based on the total mixture, of a compound of general formula (I):

ROOC-Ar-OOC-Ar'-COO-Ar-COOR (I)

where Ar and Ar', the same or different from each other, represent aromatic radicals containing from 6 to 20 (preferably 6 to 12) carbon atoms (e.g. phenylene or naphthylene) and R represents hydrogen or C₁-C₄ alkyl (e.g. methyl or ethyl).

Preferred polyesters in accordance with the present invention are those obtained in the presence of 0.5 to 1 mole-% of the reagent having general formula (I).

Preferred compounds of general formula (I) are those wherein R represents hydrogen, methyl or ethyl and/or wherein Ar and Ar' are selected from benzene rings or naphthalene rings, in particular benzene and naphthalene rings having reactive (COO) functions in positions (1,2) and (1,3) in case of the benzene ring and (1,6), (2,3), (2,6) or (2,7) in case of the naphthalene ring.

Examples of alkylene glycols particularly suitable for use in the present invention are ethylene glycol and butylene glycol.

The compounds of general formula (I) are well-known products whose preparation is described, e.g., in Chemical Abstracts, vol. 99, no. 218533 (1983) and Chemical Abstracts, Vol. 97, no. 72969 (1982).

The polyesters obtained by the process of the present invention usually have an inherent viscosity, measured in phenol/tetrachloroethane (60/40 by weight) at 30°C and with conentrations of 0.25 g/dl, of higher than 0.5 dl/g, generally from 0.6 to 1.5 dl/g, a crystallization temperature which is higher than 170°C, generally ranging from 175 to 200°C, and a glass transition temperature (Tg) above 75°C.

In particular, the polyesters basically obtained from terephthalic acid, ethylene glycol and the compound of formula (I) wherein Ar and Ar' are aromatic radicals having a strongly non-linear symmetry or are sterically hindered radicals (benzene rings with functional groups in position 1,2 or 1,3 or naphthylene radicals with functional groups in position 2,3) usually have a Tg of 80°C, about 5°C higher than that of "normal" PET. This is a surprising result in that it is well-known that the introduction into PET of increasing amounts of asymmetrical units, such as those deriving from isophthalic acid, causes a decrease in both the Tg and the crystallization temperature.

The polymers obtained by the process of the present invention are particularly suitable for use in the production of moulded articles which can be made by means of conventional transformation technologies for thermoplastic polymers such as, for example, injection moulding or extrusion. For example, they can be processed in the form of films or fibres, they can be used as matrices for composite materials based on fibres or inorganic charges and they can also be used in admixture with other polymers.

Specifically, the process of the present invention can be carried out as described, e.g., in "Comprehensive Polymer Science", G.C. Eastmond, A. Ledwith, S. Russo, P. Singwalt Eds. Pergamon Press, Oxford 1989, vol. 5, page 275.

In a typical synthesis procedure starting from a diester of the dicarboxylic acid, the reaction mixture is degassed, placed under an inert atmosphere (e.g. nitrogen) and heated to about 180°C, the distillation temperature of the alcohol released in the alcoholysis reaction. The temperature is then gradually increased to 280 - 290°C and the pressure reduced to 13.3 - 26.7 Pa (0.1 - 0.2 Torr) to promote the polycondensation

The reactions which occur during the above syntheses are catalyzed by compounds of acidic nature, for example protic acids such as H₂SO₄ or Lewis acids such as manganese acetate, zinc acetate, etc. In the polycondensation it is convenient to use acidic oxides such as those of antimony and germanium or the alcoholates of transition metals such as titanium tetraisopropoxide. In the present procedure it is preferred to use tetrahydrated manganese acetate and antimony oxide, as this catalytic system is less active in the catalysis of the decomposition of the polymer at high temperatures.

The advantages associated with the present invention are evident to persons skilled in the art. The possibility of producing an intrinsic increase in the crystallization kinetics avoids the necessity of resorting to nucleants, especially the salts of weak acids, which cause considerable degradation, are extended in each recycling operation of the material and cause additional costs. Moreover, an increase in the glass transition temperatures, for example in the case of PET, can provide better compatibility of said polymer with typical technologies of the packaging industry, such as filling under heat.

The examples which follow are to further illustrate the present invention but do not limit it in any way.

### EXAMPLE 1

This example describes the preparation of a polyester from dimethyl terephthalate, dimethyl 4,4'-(terephthaloyldioxy)dibenzoate and ethylene glycol.

153.6 g of dimethyl terephthalate, 3.47 g of dimethyl 4,4'-(terephthaloyldioxy)dibenzoate, 110.1 g of ethylene glycol and 150 mg of manganese acetate tetrahydrate were charged into a 500 ml glass flask under an inert atmosphere. The reaction mixture was brought to 180°C and kept at this temperature for 90 minutes to distill off the methanol. The temperature was then brought to 210°C and 70 mg of antimony trioxide and 450 mg of 2,6-di-tert-butyl-4-methylphenol were added. After raising the temperature to 240°C, the pressure was slowly reduced to 13.3 Pa (0.1 Torr); whereafter the temperature was raised to 290°C, these conditions being maintained for 30 minutes; during this period, the excess ethylene glycol was removed. After bringing the apparatus back to room temperature and to atmospheric pressure with N₂, the polymer obtained had an inherent viscosity, measured in phenol/tetrachloroethane (60/40 by weight) of 0.73 dl/g.

Its glass transition temperature, determined by differential scanning calorimetry (DSC), is shown in Table 1 where it is compared to that of a commercially available PET having a viscosity of 0.64 dl/g (Montefibre, Milan).

Table 2 indicates the temperature corresponding to the minimum exothermal crystallization peak, hereinafter referred to as Tc. This temperature was determined by means of DSC, bringing the sample to above its melting point and subsequently carrying out a temperature scanning towards the lower temperatures. It will be evident to persons skilled in the art that the higher the above temperature, the more rapidly crystals will be formed and the higher is the crystallization rate of the polyester. Also in this case, the above commercially available PET was used as comparison.

### EXAMPLE 2

The procedure described in example 1 was repeated using, however, dimethyl 4,4'-(isophthaloyldioxy)dibenzoate.

A mixture of 153.6 g of dimethyl terephthalate, 3.47 g of dimethyl 4,4'-(isophthaloyldioxy)dibenzoate, 110.0 g of ethylene glycol, 150 mg of manganese acetate tetrahydrate and 20 mg of cobalt acetate tetrahydrate was polymerized, whereafter 70 mg of antimony trioxide and 450 mg of 2,6-di-tert-butyl-4-methylphenol were added at a temperature of 230°C.

The resulting polymer had an inherent viscosity of 0.66 dl/g. The corresponding Tg and Tc data are shown in Tables 1 and 2. It can be noted that, in spite of the addition of a non-symmetrical comonomer, there is a considerable increase in the Tg and Tc also with respect to the data of example 1.

### EXAMPLE 3

The procedure described in example 2 was repeated, using a lower molar percentage of dimethyl 4,4'-(isophthaloyldioxy)-dibenzoate.

96.5 g of dimethyl terephthalate, 1.08 g of dimethyl 4,4'-(isophthaloyldioxy)dibenzoate, 68.2 g of ethylene glycol and 100 mg of manganese acetate tetrahydrate were reacted. 45 mg of antimony trioxide and 300 mg of 2,6-di-tert-butyl-4-methoxyphenol were then added at a temperature of 200°C.

The resulting polymer had an inherent viscosity of 0.76 dl/g. The corresponding Tg and Tc data are shown in Tables 1 and 2. It can be noted that, in spite of the addition of asymmetrical monomers, there is a considerable increase in the Tg and Tc, also with respect to the data relating to example 1.

### EXAMPLE 4

The procedure described in example 2 was repeated, using a higher molar percentage of dimethyl 4,4'-(isophthaloyldioxy)-dibenzoate.

95.1 g of dimethyl terephthalate, 4.34 g of dimethyl 4,4'-(isophthaloyldioxy)dibenzoate, 68.2 g of ethylene glycol and 100 mg of manganese acetate tetrahydrate were reacted. 45 mg of antimony trioxide and 250 mg of 2,6-di-tert-butyl-4-methoxyphenol were then added at a temperature of 200°C.

The resulting polymer had an inherent viscosity of 0.75 dl/g. The corresponding Tg and Tc data are shown in Tables 1 and 2. It can be noted that, even though monomers with a non-linear symmetrical substitution had been introduced, there was a considerable increase in the Tg and Tc, also with respect to the data relating to example 1.

### EXAMPLE 5

The procedure described in example 1 was repeated, using dimethyl 3,3'-(terephthaloyldioxy)-di-2,2'-naphthoate.

119.1 g of dimethyl terephthalate, 3.31 g of dimethyl 3,3'-(terephthaloyldioxy)-di-2,2'-naphthoate, 84.7 g of ethylene glycol and 124 mg of manganese acetate tetrahydrate were reacted. 56 mg of antimony trioxide and 370 mg of 2,6-di-tertbuty-4-methylphenol were then added at a temperature of 200°C.

The resulting polymer had an inherent viscosity of 0.72 dl/g. The corresponding Tg and Tc data are shown in Tables 1 and 2. It can be noted that even though monomers with strongly hindered ester groups had been introduced, there was a considerable increase in the Tg and Tc, also with respect to the data relating to example 1.

### EXAMPLE 6

Crystallization kinetics were obtained with the comparative PET and one of the polyesters of obtained by the process the present invention, i.e. that of example 2. Said kinetics were derived from DSC measurements, using the following procedure:
- the sample was heated to 280°C and kept in the molten state for 2 minutes, in order to destroy all crystalline centres;
- the temperature was rapidly decreased (150°C/minute) to the required value;
- keeping the temperature constant, the values of the thermal exchange in relation to the time were recorded;
- the half-crystallization time was considered to correspond to an area equal to half of the exothermal crystallization peak.

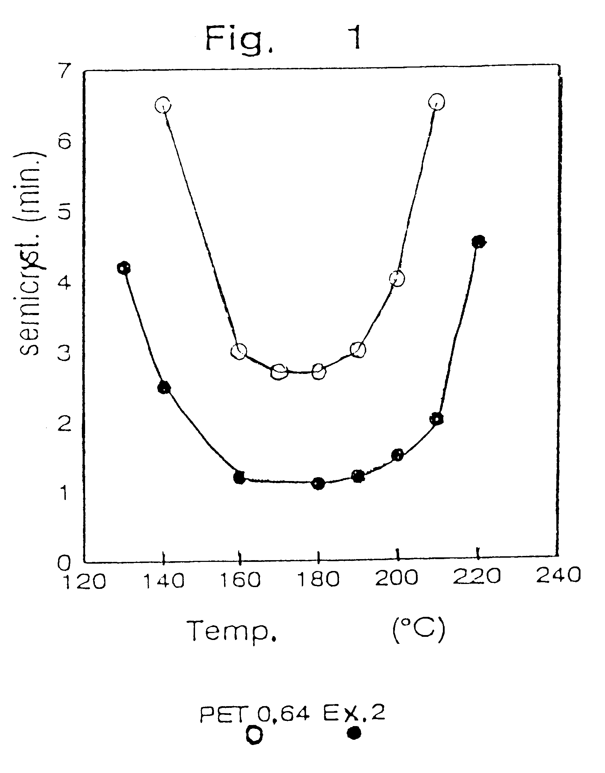

Figure 1 shows the half-crystallization times in relation to the temperature of the PET used as reference and of the polyester of example 2. In the latter case, there is a drastic reduction in the half-crystallization times, corresponding to a considerable increase in the crystallization rate. There is also a broader temperature range within which rapid crystallization occurs, with corresponding advantages during moulding.

**TABLE 1**

| Sample | Tg (°C) |
|---|---|
| PET (comparison) | 75 |
| Example 1 | 80 |
| Example 2 | 81 |
| Example 3 | 78 |
| Example 4 | 78 |
| Example 5 | 81 |

**TABLE 2**

| Sample | Tc (°C) |
|---|---|
| PET (comparison) | 177 |
| Example 1 | 188 |
| Example 2 | 195 |
| Example 3 | 182 |
| Example 4 | 179 |
| Example 5 | 196 |

## Claims

1. Process for preparing polyesters showing a high crystallization rate, comprising the reaction of at least one C₂-C₄ alkylene glycol with a mixture composed of (a) at least one of terephthalic acid and/or derivatives thereof and (b) 0.1 to 1.5 mole-%, based on the total mixture, of a compound of general formula (I):
ROOC-Ar-OOC-Ar'-COO-Ar-COOR (I)
wherein Ar and Ar', the same or different from each other, represent aromatic radicals containing from 6 to 20 carbon atoms and R represents hydrogen or C₁-C₄ alkyl.

2. Process according to claim 1, wherein 0.5 to 1% by moles of the compound of general formula (I) are used.

3. Process according to any one of claims 1 and 2, wherein the compounds of general formula (I) are selected from those wherein R represents hydrogen, methyl or ethyl and/or Ar and Ar' are independently selected from benzene rings having the reactive functions in positions (1,2) and (1,3) and naphthalene rings having the reactive functions in positions (1,6), (2,3), (2,6) or (2,7).

4. Process according to any one of the preceding claims, wherein the alkylene glycol is selected from ethylene glycol, butylene glycol and mixtures thereof.

5. Process according to any one of the preceding claims, wherein the polyesters obtained have an inherent viscosity, measured in phenol/tetrachloroethane (60/40 by weight) at 30°C and with concentrations of 0.25 g/dl, of higher than 0.5 dl/g, particularly from 0.6 to 1.5 dl/g, and/or a crystallization temperature higher than 170°C, particularly from 175 to 200°C, and/or a glass transition temperature (Tg) higher than 75°C.

## Patentansprüche

1. Verfahren zur Herstellung von Polyestern, die eine hohe Kristallisationsgeschwindigkeit aufweisen, welches umfaßt: das Umsetzen von wenigstens einem C₂-C₄-Alkylenglykol mit einer Mischung, zusammengesetzt aus (a) wenigstens einer der Verbindungen: Terephthalsäure und/oder Derivate davon, und (b) 0,1 bis 1,5 Mol-%, bezogen auf die gesamte Mischung, einer Verbindung der allgemeinen Formel (I):
ROOC-Ar-OOC-Ar'-COO-Ar-COOR (I)
worin Ar und Ar', die gleich oder verschieden sein können, aromatische Gruppen mit 6 bis 20 Kohlenstoffatomen darstellen, und R Wasserstoff oder C₁-C₄-Alkyl bedeutet.

2. Verfahren nach Anspruch 1, wobei 0,5 bis 1 Mol-% der Verbindung der allgemeinen Formel (I) verwendet wird.

3. Verfahren nach einem der Ansprüche 1 und 2, wobei die Verbindungen der allgemeinen Formel (I) ausgewählt werden aus solchen, worin R Wasserstoff, Methyl oder Ethyl bedeutet und/oder Ar und Ar' unabhängig ausgewählt werden aus Benzolringen mit den reaktiven funktionellen Gruppen in den Stellungen (1,2) und (1,3) und Naphthalinringen mit den reaktiven funktionellen Gruppen in den Stellungen (1,6), (2,3), (2,6) oder (2,7).

4. Verfahren nach einem der vorhergehenden Ansprüche, wobei das Alkylenglykol ausgewählt ist aus Ethylenglykol, Butylenglykol und Mischungen von diesen.

5. Verfahren nach einem der vorhergehenden Ansprüche, wobei die erhaltenen Polyester eine logarithmische Viskositätszahl, gemessen in Phenol/Tetrachlorethan (60/40 Gew.-%) bei 30° C und in Konzentrationen von 0,25 g/dl, von mehr als 0,5 dl/g, insbesondere von 0,6 bis 1,5 dl/g und/oder eine Kristallisationstemperatur von mehr als 170° C, insbesondere von 175 bis 200° C, und/oder eine Glasübergangstemperatur (Tg) von mehr als 75° C aufweisen.

## Revendications

1. Procédé pour préparer des polyesters présentant une vitesse de cristallisation élevée, comprenant la réaction d'au moins un alkylèneglycol en C₂-C₄ avec un mélange composé de (a) au moins l'un des acide téréphtalique et/ou dérivés de ces derniers, et de (b) 0,1 à 1,5 % en moles, par rapport au mélange total, d'un composé de formule générale (I) :
ROOC-Ar-OOC-Ar'-COO-Ar-COOR (I)
dans laquelle Ar et Ar', identiques ou différents les uns des autres, représentent des radicaux aromatiques comportant de 6 à 20 atomes de carbone et R représente un atome d'hydrogène ou un groupe alkyle en C₁-C₄.

2. Procédé conforme à la revendication 1, dans lequel on utilise de 0,5 à 1 % en moles du composé de formule générale (I).

3. Procédé conforme à l'une quelconque des revendications 1 et 2, dans lequel les composés de formule générale (I) sont choisis parmi ceux dans lesquels R représente un atome d'hydrogène, un groupe méthyle ou éthyle, et/ou Ar et Ar' sont indépendamment choisis parmi des noyaux benzéniques présentant les fonctions réactives en positions (1,2) et (1,3) et des noyaux naphtaléniques présentant les fonctions réactives en positions (1,6), (2,3), (2,6) ou (2,7).

4. Procédé conforme à l'une quelconque des précédentes revendications, dans lequel l'alkylèneglycol est choisi parmi l'éthylèneglycol, le butylèneglycol et leurs mélanges.

5. Procédé conforme à l'une quelconque des précédentes revendications, dans lequel les polyesters obtenus ont une viscosité inhérente, qui est mesurée dans le phénol/tétrachloroéthane (60/40 en poids) à 30°C avec des concentrations de 0,25 g/dl et qui est supérieure à 0,5 dl/g, en particulier comprise entre 0,6 et 1,5 dl/g, et/ou une température de cristallisation supérieure à 170° C, en particulier comprise entre 175 et 200° C, et/ou une température de transition vitreuse (Tg) supérieure à 75° C.
